# EUROPÄISCHE PATENTSCHRIFT

(11) **EP 2 665 949 B1**
(45) Veröffentlichungstag und Bekanntmachung des Hinweises auf die Patenterteilung: **24.02.2016**
(21) Anmeldenummer: 11781815.3
(22) Anmeldetag: 14.11.2011
(51) Int. Cl.: F16J 1/00, F04B 53/14, F02F 3/00

(54) **HUBKOLBEN FÜR EINE HUBKOLBENMASCHINE SOWIE HUBKOLBENMASCHINE, SOWIE ZYLINDER EINER HUBKOLBENMASCHINE**
RECIPROCATING PISTON FOR A RECIPROCATING-PISTON ENGINE AND RECIPROCATING-PISTON ENGINE, AND CYLINDER OF A RECIPROCATING-PISTON ENGINE
PISTON ALTERNATIF POUR MOTEUR À PISTON ALTERNATIF, ET MOTEUR À PISTON ALTERNATIF, ET CYLINDRE D'UN MOTEUR À PISTON ALTERNATIF

(30) Priorität: 21.01.2011 DE 102011009094
(43) Veröffentlichungstag der Anmeldung: 27.11.2013
(73) Patentinhaber: Geist, Bertwin R., 82547 Eurasburg (DE)
(72) Erfinder: FICHT, Reinhold, 85614 Kirchseeon (DE)
(74) Vertreter: nospat Patent- und Rechtsanwälte GbR
(86) Internationale Anmeldenummer: PCT/EP2011/070046
(87) Internationale Veröffentlichungsnummer: WO 2012/097893

(56) Entgegenhaltungen:
- EP-A2- 0 197 449
- WO-A1-93/22585

## Beschreibung

Die vorliegende Erfindung betrifft einen keramischen Hubkolben für eine Hubkolbenmaschine, insbesondere einen Hubkolbenmotor, mit Kurbeltrieb, vorzugsweise mit Kurbelschlaufentrieb, mit einer mit dem Hubkolben starr verbundenen Kolbenstange. Des Weiteren betrifft die vorliegende Erfindung eine Hubkolbenmaschine, insbesondere einen Hubkolbenmotor, mit Kurbeltrieb, vorzugsweise mit Kurbelschlaufentrieb, mit einem derartigen keramischen Hubkolben.

Zudem betrifft die Erfindung einen Zylinder einer Hubkolbenmaschine, insbesondere eines Hubkolbenmotors, mit Kurbeltrieb, vorzugsweise mit Kurbelschlaufentrieb, mit zumindest einer in einer Zylinderbohrung des Zylinders angeordneten keramischen Zylinderlaufbuchse und einem in der Zylinderlaufbuchse hin- und her beweglich geführten keramischem Hubkolben.

Aus der EP 0 197 449 B1 ist ein mehrteiliger Hubkolben für Brennkraftmaschinen, insbesondere mit Kurbelschlaufentrieb, bekannt, der mit einer Kolbenstange starr verbunden ist. Dieser Kolben enthält ein aus keramischem Werkstoff, z.B. Zirkonoxid, Siliziumnitrid oder Siliziumcarbid, insbesondere Si-SiC, bestehendes Kolbenhemd mit einem Kolbenhemdboden, einen ebenfalls aus keramischem Werkstoff hergestellten Kolbenboden mit Feuersteg, versehen mit einer Ringnut zur Aufnahme eines aus keramischem Werkstoff bestehenden, geschlitzten Kolbenringes. Dabei sitzt der Kolbenboden auf dem Kolbenhemdboden und beide Kolbenhauptteile sind durch eine gemeinsame Zentrierhülse, ebenfalls aus keramischem Werkstoff, radial fixiert. Der Hubkolben weist au-ßerdem ein auf der Kolbenstange mit Passsitz fixiertes, aus Metall oder einer Metalllegierung hergestelltes Zentrierstück mit Grundplatte auf, auf welcher der Kolbenhemdboden sitzt, und einen, aus dem gleichen Werkstoff wie das Zentrierstück hergestellten Abschlussdeckel, der auf dem Kolbenboden sitzt und sich radial bis zu dessen Feuersteg erstreckt. Der Abschlussdeckel weist eine Zentriernabe auf, die gegenüber dem Zentrierstück radial fixiert ist, mit einem axialen Distanzspalt zwischen beiden Teilen, wobei der Kolbenhemdboden und der Kolbenboden zwischen dem Abschlussdeckel und der Grundplatte durch eine der Kolbenstange zugeordnete Verschraubung axial zusammengespannt sind. Aufgrund der zweiteiligen Ausführung ist es möglich auch Kolbenringe aus keramischem Material einzusetzen. Diese Anordnung hat sich bewährt.

Die DE 33 03 229 A1 offenbart einen Keramikverbrennungsmotor ohne Kolbenschmierung mit einem Keramikkolben, der geradlinig in einem Keramikzylinder läuft, wobei keine Berührung zwischen dem Keramikkolben und dem Keramikzylinder besteht, sondern ein Ringspalt dazwischen vorhanden ist.

Aus der WO 00/25012 A1 ist ein Kohlenstoffkolben für eine Brennkraftmaschine bekannt. Als Kolbenringe für den Kolben können z.B. Kolbenringe aus Kohlenstoff verwendet werden. Des Weiteren weist der Zylinder, in dem der Kohlenstoffkolben läuft, gemäß der WO 00/25012 A1, z.B. eine keramische Zylinderlauffläche auf. Vorteil des Kohlenstoffkolbens sind insbesondere die guten Notlaufeigenschaften.

Aufgabe der vorliegenden Erfindung ist die Bereiststellung eines keramischen Hubkolbens für eine Hubkolbenmaschine, insbesondere einen Hubkolbenmotor, mit Kurbeltrieb, vorzugsweise mit Kurbelschlaufentrieb, mit einer mit dem Hubkolben starr verbundenen Kolbenstange, wobei eine sichere, dauerhafte Verbindung auch im Betrieb der Hubkolbenmaschine gewährleistet sein soll.

Weitere Aufgabe ist die Bereitstellung einer Hubkolbenmaschine mit einem derartigen Hubkolben.

Weitere Aufgabe ist die Bereiststellung eines Zylinders einer Hubkolbenmaschine, insbesondere eines Hubkolbenmotors, mit Kurbeltrieb, vorzugsweise mit Kurbelschlaufentrieb, mit zumindest einer in einer Zylinderbohrung des Zylinders angeordneten keramischen Zylinderlaufbuchse und einem in der Zylinderlaufbuchse hin- und her beweglich geführten keramischem Hubkolben, wobei ein Endringen von Öl vom Kurbeltrieb in den Brennraum vermieden werden soll und eine lange Lebensdauer der Hubkolbenmaschine gewährleistet werden soll.

Diese Aufgaben werden durch die Merkmale der Ansprüche 1, 7 und 8 gelöst. Vorteilhafte Weiterbildungen der Erfindung sind in den jeweiligen Unteransprüchen gekennzeichnet.

Im Folgenden wird die Erfindung anhand einer Zeichnung beispielhaft näher erläutert. Es zeigen:
- Figur 1:: Einen Längsschnitt eines Hubkolbens mit einer mit dem Hubkolben starr verbundenen Kolbenstange gemäß einer ersten Ausführungsform der Erfindung

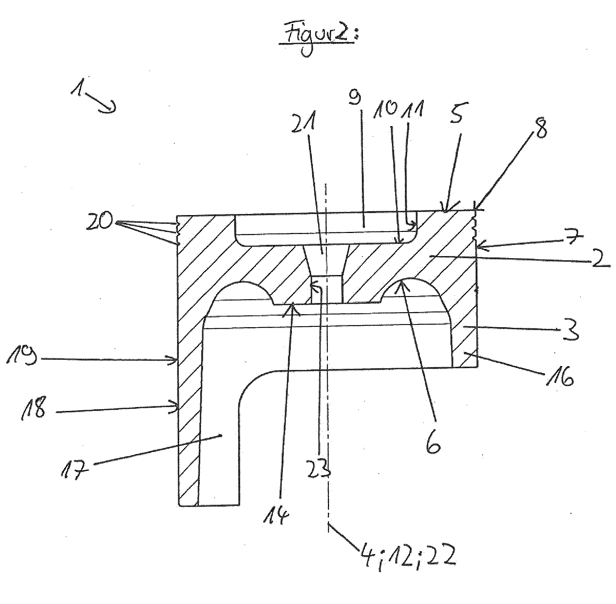

- Figur 2:: Einen Längsschnitt des Hubkolbens gemäß Figur 1 ohne Kolbenstange und Verbindungsmittel
- Figur 3:: Einen Längsschnitt einer ersten Dehnungskompensationsscheibe
- Figur 4:: Einen Längsschnitt einer zweiten Dehnungskompensationsscheibe
- Figur 5:: Einen Längsschnitt einer Kopfschraube
- Figur 6:: Einen Längsschnitt eines Hubkolbens mit einer mit dem Hubkolben starr verbundenen Kolbenstange gemäß einer weiteren Ausführungsform der Erfindung

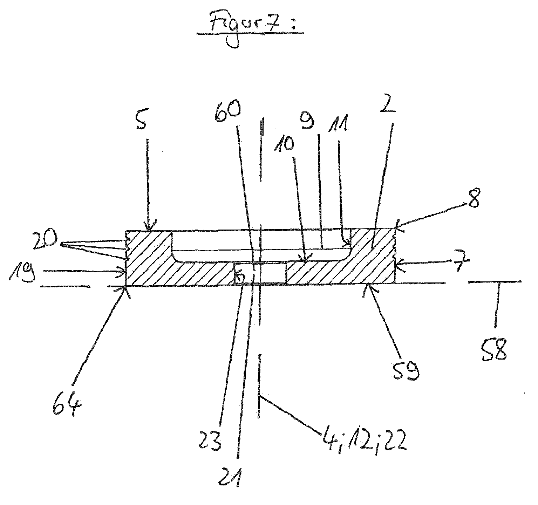

- Figur 7:: Einen Längsschnitt eines ersten Kolbenteils des Hubkolbens gemäß Figur 6

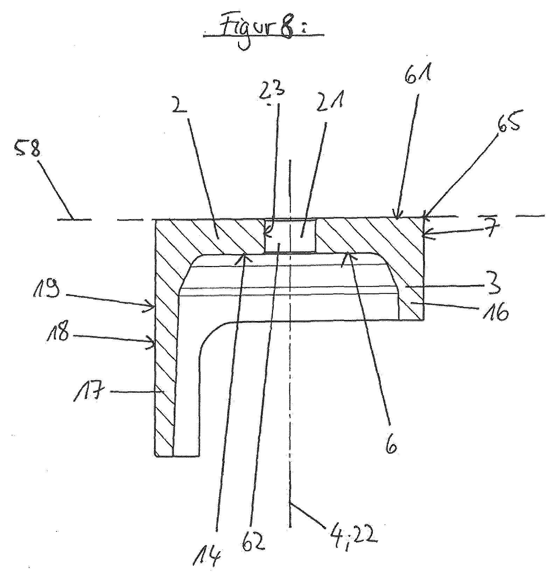

- Figur 8:: Einen Längsschnitt eines zweiten Kolbenteils des Hubkolbens gemäß Figur 6
- Figur 9:: Einen Längsschnitt eines Hubkolbens mit einer mit dem Hubkolben starr verbundenen Kolbenstange gemäß einer weiteren Ausführungsform der Erfindung
- Figur 10:: Vereinfacht eine perspektivische Ansicht eines Teils eines Kurbelschlaufentriebs, bei der einer der Hubkolben explodiert dargestellt ist
- Figur 11:: Vereinfacht einen Längsschnitt durch die Kolbenstange mit Schraube gemäß einer alternativen Ausführungsform der Schraube
- Figur 12:: Vereinfacht einen Längsschnitt durch die Kolbenstange mit Schraube gemäß einer weiteren alternativen Ausführungsform der Schraube

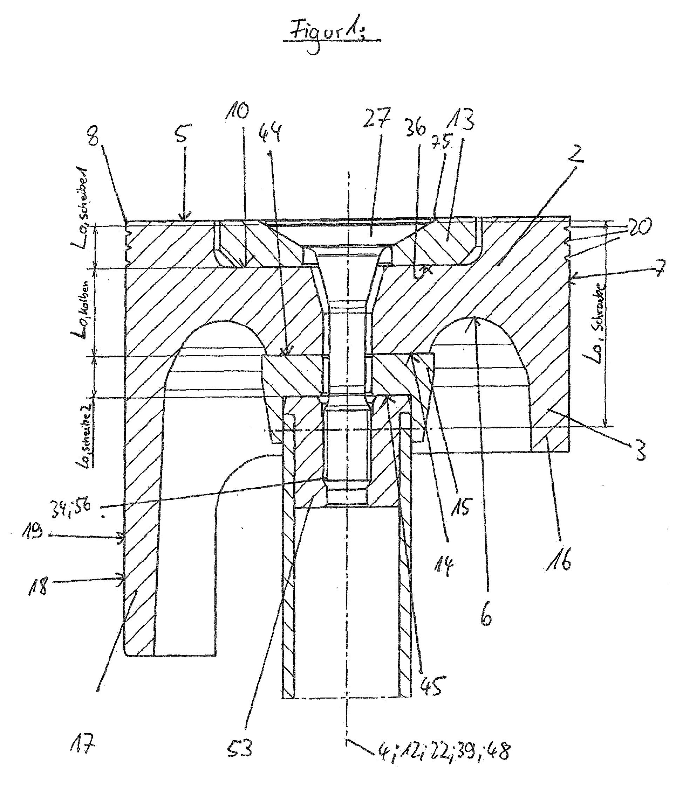

Der erfindungsgemäße Hubkolben 1 (Figuren 1, 6 und 9) weist einen Kolbenboden bzw. eine Kolbenbodenwandung 2, einen Kolbenschaft bzw. ein Kolbenhemd bzw. einen Kolbenmantel 3 und eine Kolbenachse 4 auf.

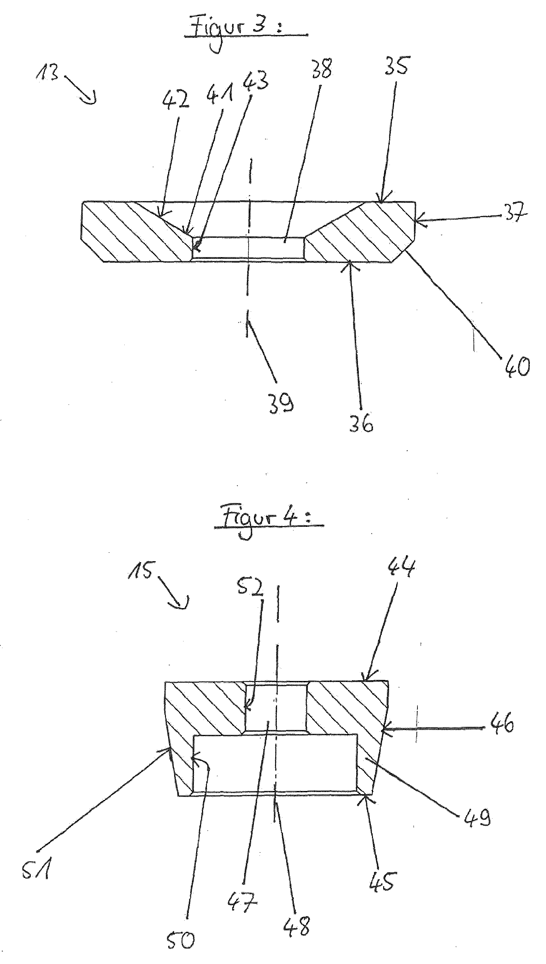

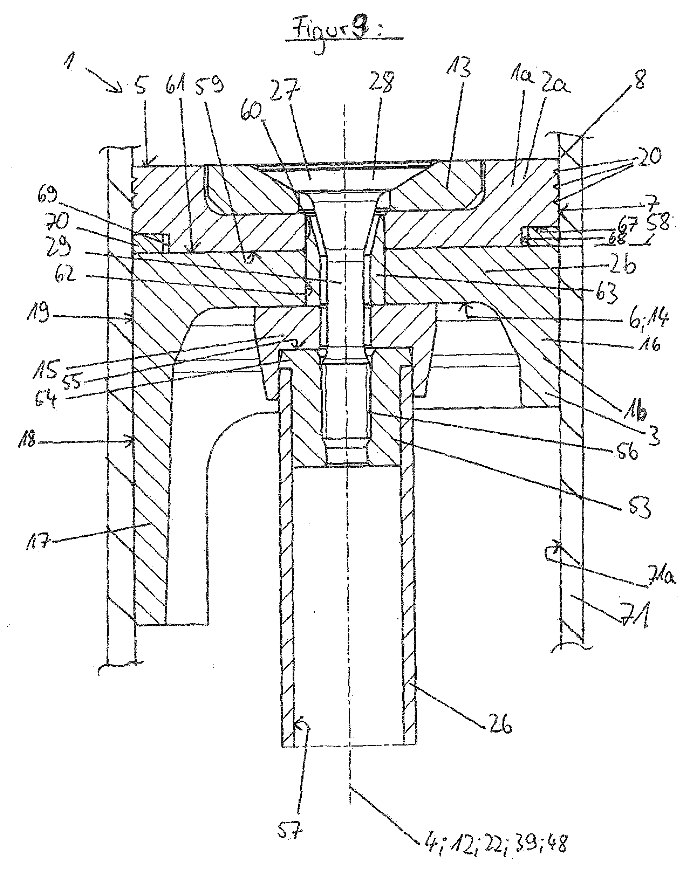

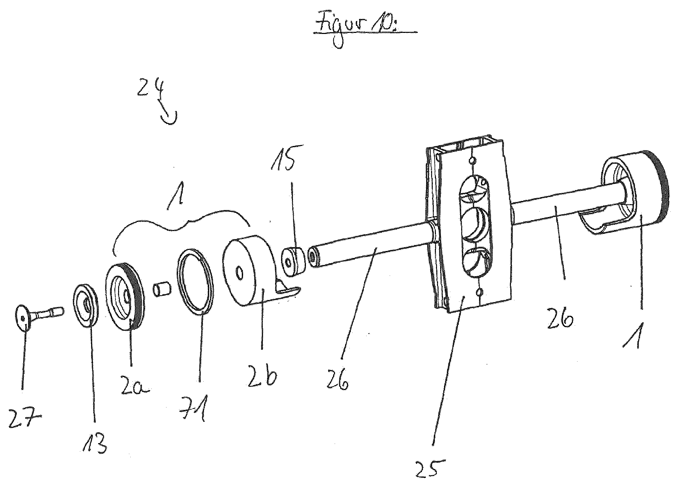

Im eingebauten Zustand ist der Hubkolben 1 in an sich bekannter Weise in einem Zylinder einer Hubkolbenmaschine parallel zur Kolbenachse 4 hin- und her verschieblich geführt. Bei der Hubkolbenmaschine handelt es sich vorzugsweise um eine Hubkolbenmaschine mit Kurbelschlaufentrieb 24 (Figur 4). Ein Teil des Kurbelschlaufentriebs 24 (ohne Kurbelwelle) mit einer mittigen Kurbelschlaufe 25 und zwei Kolbenstangen 26, die an jeweils an ihrem einen Enden mit einem erfindungsgemäßen Hubkolben 1 starr verbunden sind und an ihrem anderen Ende mit der Kurbelschlaufe 25 starr verbunden sind, ist in Fig. 10 schematisch dargestellt. Die beiden Kolbenstangen 26 sind zudem vorzugsweise jeweils in einem Trennwandlager einer Trennwand des Gehäuses der Hubkolbenmaschine (nicht dargestellt) in an sich bekannter Weise parallel zur Kolbenachse 4 hin- und her verschieblich gelagert. Die Trennwand dichtet bekanntermaßen den den Kurbeltrieb umgebenden bzw. aufnehmenden Gehäuseteil von dem den Kolben 1 und den Zylinder aufnehmenden Gehäuseteil ab. Je nach Art der Hubkolbenmaschine wird mittels des Kurbelschlaufentriebs 24 die translatorische, oszillierende Bewegung der beiden gleichlaufenden Kolben 1 in eine Rotation einer Kurbelwelle (nicht dargestellt) umgewandelt oder es wird die Rotation der Kurbelwelle in eine translatorische, oszillierende Bewegung der beiden gleichlaufenden Kolben 1 umgewandelt. Die Hubkolbenmaschine weist in an sich bekannter Weise zudem einen Gehäuseteil zur Aufnahme des Kurbeltriebes und jeweils zumindest einen Zylinder mit einer Zylinderbohrung zur Aufnahme eines Kolbens 1 und einen mit dem Zylinder verbundenen Zylinderkopf auf (nicht dargestellt). In der Zylinderbohrung des Zylinders ist dabei gemäß einem ersten Aspekt der Erfindung eine Zylinderlaufbuchse bzw. ein Zylinderliner 71 (Fig. 9) aus keramischem Material angeordnet. Die Lagerung der Zylinderlaufbuchse 71 in der Zylinderbohrung erfolgt dabei vorzugsweise gemäß der deutschen Patentanmeldung DE 10 2010 054 060 "Zylinder einer Hubkolbenmaschine sowie Hubkolbenmaschine" des Anmelders, angemeldet am 10. Dezember 2010, auf deren Inhalt hiermit Bezug genommen wird. Des Weiteren kann der erfindungsgemäße Zylinder als Einzelzylinder ausgebildet sein, wobei zweckmäßigerweise mehrere Einzelzylinder in einer Hubkolbenmaschine vorhanden sind. Alternativ dazu können mehrere erfindungsgemäße Zylinder in einem gemeinsamen Zylinderblock angeordnet sein. Dabei können die einzelnen Zylinder beispielsweise in Reihe oder sternförmig angeordnet sein.

Die im Wesentlichen scheibenartige Kolbenbodenwandung 2 weist eine im eingebauten Zustand dem Zylinderkopf zugewandte, zylinderkopfseitige Bodenfläche 5, eine dieser axial gegenüberliegende Bodenunterseite 6 und eine zylindrische Bodenwandungsaußenfläche 7 auf. Die Bodenfläche 5 ist bevorzugt ebenflächig und senkrecht zur Kolbenachse 4. Die Bodenfläche 5 schließt in der Hubkolbenmaschine in an sich bekannter Weise den Brennraum bzw. Kompressionsraum einseitig ab. Die Bodenwandungsaußenfläche 7 dient zur Führung des Hubkolbens 1 im Zylinder, insbesondere in der Zylinderlaufbuchse, der Hubkolbenmaschine. Des Weiteren geht die Bodenfläche 5 über eine ringförmige, umlaufende Bodenkante 8 in die Bodenwandungsaußenfläche 7 über. Zudem sind vorzugsweise mehrere in axialer Richtung zueinander benachbarte Nuten 20 in der Bodenwandungsaußenfläche 7 vorgesehen, die in an sich bekannter Weise als Labyrinthdichtung dienen.

Die Kolbenbodenwandung 2 weist zudem eine, insbesondere mittige, Vertiefung bzw. Mulde 9 auf, die sich von der Bodenfläche 5 her in Richtung der Kolbenachse 4 in die Kolbenbodenwandung 2 hinein erstreckt. Die Vertiefung 9 weist eine Vertiefungsbodenfläche 10 und eine Vertiefungsumfangsfläche 11 auf. Die Vertiefungsbodenfläche 10 ist vorzugsweise ebenflächig und senkrecht zur Kolbenachse 4. Die Vertiefungsumfangsfläche 11 ist vorzugsweise zylindrisch ausgebildet. Die Vertiefung 9 weist außerdem eine Vertiefungsachse 12 auf, die insbesondere koaxial zur Kolbenachse 4 ist. In der Vertiefung 9 ist gemäß der Erfindung eine erste Distanzscheibe bzw. Dehnungskompensationsscheibe 13 angeordnet, auf deren Funktion weiter unten näher eingegangen wird.

Die Bodenunterseite 6 weist eine, in Bezug zur Kolbenachse 4 mittige, Anlagefläche 14 auf. Die Anlagefläche 14 ist insbesondere ebenflächig und senkrecht zur Kolbenachse 4 ausgebildet. Die Anlagefläche 14 dient zur Anlage einer zweiten Distanzscheibe bzw. Dehnungskompensationsscheibe 15, auf deren Funktion ebenfalls weiter unten näher eingegangen wird.

Außerdem weist die Kolbenbodenwandung 4 eine durchgehende Bodenaussparung 21 mit einer Aussparungsachse 22 auf. Die Aussparungsachse 22 ist vorzugsweise koaxial zur Kolbenachse 4. Die Bodenaussparung 21 erstreckt sich von der Vertiefungsbodenfläche 10 bis zur Anlagefläche 14 durchgehend durch die Kolbenbodenwandung 4 durch und weist eine Ausparungsfläche 23 auf. Dabei weist die Bodenaussparung 21 zweckmäßigerweise in axialer Richtung in Bezug zur Aussparungsachse 22 gesehen zunächst einen sich konisch verjüngenden Abschnitt und einen sich daran anschließenden zylindrischen Abschnitt auf.

Der Kolbenmantel 3 schließt sich in axialer Richtung an die Kolbenbodenwandung 2 an und weist vorzugsweise zunächst einen ersten, insbesondere hohlzylindrischen bzw. ringförmigen, Mantelabschnitt 16 auf. An den ersten Mantelabschnitt 16 schließt sich ein zylindermantelsegmentförmiger, zweiter Mantelabschnitt 17 an, der in an sich bekannter Weise zur Steuerung, insbesondere zum Öffnen und Schließen, des Auslassschlitzes dient. Des Weiteren weist der Kolbenmantel 3 eine, insbesondere zylindrische, Mantelaußenfläche 18 auf. Die Mantelaußenfläche 18 schließt sich an die Bodenwandungsaußenfläche 7 an bzw. geht in diese über. Die Bodenwandungsaußenfläche 7 und die Mantelaußenfläche 18 bilden somit eine äußere, insbesondere zylindrische, Kolbenaußenfläche bzw. Kolbenlauffläche 19, die zur Führung des Hubkolbens 1 in der Zylinderbohrung des Zylinders dient. Die Gestaltung des Kolbenmantels 3 kann variieren und hängt dabei in an sich bekannter Weise von den jeweiligen Anforderungen ab, beispielsweise von der Lage der Einlass-, Auslass-, und Überströmöffnungen bei einer nach dem 2-Takt-Prinzip arbeitenden Hubkolbenmaschine. Bei nach dem 4-Takt-Prinzip arbeitenden Hubkolbenmaschinen ist beispielsweise der zylindermantelsegmentförmige, zweite Mantelabschnitt 17 nicht vorhanden, da die Steuerung der Ein- und Auslassöffnungen in an sich bekannter Weise mittels Ventilen erfolgt.

Der Hubkolben 1, insbesondere die Kolbenbodenwandung 2 und der, vorzugsweise einstückig mit dieser ausgeführte, Kolbenschaft 3, besteht zudem erfindungsgemäß aus Keramik bzw. keramischem Material, insbesondere aus SiC oder einem Kohlenstoffwerkstoff, insbesondere aus einem Graphitwerkstoff. Kohlenstoffwerkstoffe sind keramische bzw. keramisch gebrannte, anorganische Materialien, die überwiegend aus elementarem Kohlenstoff in einer der drei natürlich vorkommenden Kohlenstoffmodifikationen bestehen. Dazu zählen unter anderem Graphitwerkstoffe (z.B. rein, imprägniert oder im Verbund mit Metallen). Für die vorliegende Erfindung werden aufgrund ihrer hervorragenden Trockenschmiereigenschaften und Notlaufeigenschaften bevorzugt die Graphitwerkstoffe, insbesondere Kohlenstoffgraphit oder Elektrographit, für den Hubkolben 1 verwendet. Kohlenstoffgraphit entsteht bekanntermaßen als erste Stufe im mehrstufigen Herstellungsprozess künstlicher Graphitwerkstoffe als im Wesentlichen amorphes Produkt durch Verkokung der kohlenstoffhaltigen Ausgangsmaterialien. Elektrographit entsteht bekanntermaßen durch Graphitisierung, einer Hochtemperaturbehandlung, des Kohlenstoffgraphits, bei der die Kristallinität zunimmt und der Werkstoff seine graphitischen Eigenschaften erhält. Der Kohlenstoffwerkstoff kann mit anderen Stoffen, beispielsweise auch mit Metallen oder Metalllegierungen angereichert sein.

Bevorzugt weist das Material des Hubkolbens 1 einen Wärmeausdehnungskoeffizienten α_{Kolben} von 3,0,10⁻⁶ bis 6,5·10⁻⁶ K⁻¹, insbesondere 4,5·10⁻⁶ bis 5,0· 10⁻⁶ K⁻¹ auf.

Gemäß einem Aspekt der Erfindung ist der aus einem Kohlenstoffwerkstoff, insbesondere aus einem Graphitwerkstoff, bestehende Hubkolben 1 in einer keramischen Zylinderlaufbuchse 71 in einer zur Kolbenachse 4 parallelen Richtung hin- und her verschieblich geführt. Gemäß der Erfindung besteht die Zylinderlaufbuchse 71 bevorzugt aus SiC (Siliciumcarbid) oder aus Si₃N₄ (Siliziumnitrid). Insbesondere besteht die Zylinderlaufbuchse 71 aus Si-Metall infiltriertem SiC (Si SiC) oder SiSiC-C (kohlenstoffhaltigem Siliciumcarbid) oder einem Verbundwerkstoff aus SiC und Graphit, bevorzugt aus SiC30, oder einem Verbundwerkstoff aus Si₃N₄ und Graphit. Vorteil der Graphit enthaltenden Materialien ist, dass Graphit als Schmiermittel wirkt. Infolgedessen werden im Rahmen der Erfindung bevorzugt keramische Verbundwerkstoffe für die Zylinderlaufbuchse 71 verwendet, die Partikel aus einem festen, insbesondere mineralischen, Schmiermittel enthalten, insbesondere mit dem Schmiermittel infiltriert sind, wobei auch andere Schmiermittel als Graphit in Betracht kommen, z.B. Molybdändisulfid MoS₂. Des Weiteren muss das Feststoffschmiermittel nicht infiltriert werden, sondern kann auch bei der Herstellung der Rohmasse beigemischt werden.

Bei dieser erfindungsgemäß ausgewählten Werkstoffkombination ist keine Schmierung notwendig. Der Hubkolben 1 läuft also trocken in der Zylinderlaufbuchse 71. Dies wird durch die erfindungsgemäße Werkstoffpaarung des weichen Kohlenstoffwerkstoffes mit dem harten keramischen Material möglich. Der Graphitanteil des Kohlenstoffwerkstoffes sorgt für eine ausreichende Feststoffschmierung und gute Notlaufeigenschaften. Da kein Öl zur Schmierung vorhanden ist, kann auch kein Öl in die Abgase gelangen. Die Erfindung ist besonders vorteilhaft für Biogas-Hubkolbenmotoren. Denn Biogase enthalten oft Verunreinigungen, unter anderem einen hohen Schwefelanteil, so dass bei der Verbrennung Schwefelsäure frei wird. Die giftigen Nebenprodukte greifen oftmals die Materialien der Kolben an, was bei dem erfindungsgemäßen Hubkolben 1 aus dem Kohlenstoffwerkstoff unproblematisch ist, da der Kohlenstoffwerkstoff korrosionsbeständig gegen aggressive Gase ist. Des Weiteren wäre bei Vorhandensein der Trennwand des Gehäuses eine separate Kolbenschmierung notwendig, was aufwendig wäre und durch die Erfindung vermieden wird.

Des Weiteren ist auch kein Kolbenring notwendig, da die Wärmeausdehnungskoeffizienten von Kohlenstoff und Keramik, insbesondere SiC, relativ gleich sind.

Der Durchmesser der Kolbenlauffläche 19 ist zudem etwas geringer als der Innendurchmesser der Zylinderbohrung oder der Durchmesser einer Zylinderbuchsenlauffläche 71 a der Zylinderlaufbuchse 71, falls eine vorhanden ist, so dass ein Ringspalt zwischen der Kolbenlauffläche 19 und einer Lauffläche der Zylinderbohrung oder der Zylinderbuchsenlauffläche 71 a vorhanden ist. Der Ringspalt muss so dimensioniert werden, dass er eine ausreichende Abdichtung des Brennraums bzw. Kompressionsraums gewährleistet.

Wie bereits oben erläutert, ist der erfindungsgemäße Hubkolben 1 zudem starr mit der Kolbenstange 26 verbunden. Die dazu vorhandene Verbindungseinrichtung weist eine Kopfschraube 27 sowie die erste und die zweite Dehnungskompensationsscheibe 13; 15 auf.

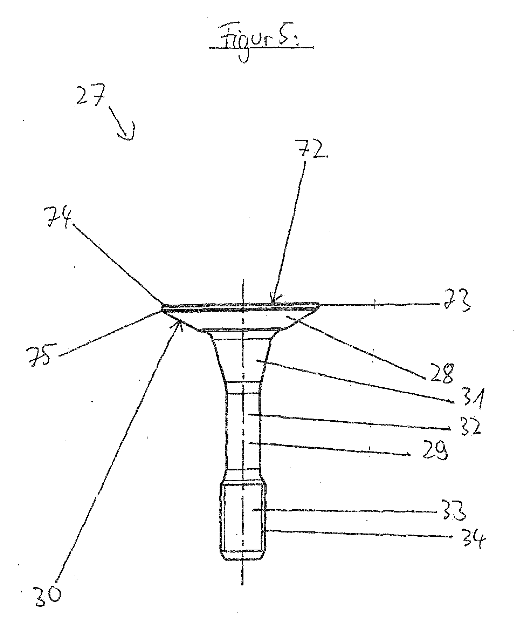

Die Kopfschraube 27 (Fig. 5) ist vorzugsweise eine Senkschraube und weist einen Schraubenkopf 28 und einen Schraubenschaft 29 auf. Der Schraubenkopf 28 weist vorzugsweise eine konische bzw. kegelförmige, sich zum Schraubenschaft 29 hin verjüngende Kopfauflagefläche 30 auf. Die Steigung der Kopfauflagefläche 30 ist dabei möglichst gering, um eine gute Lastverteilung zu erreichen. Des Weiteren weist der Schraubenkopf 28 vorzugsweise eine Kopffläche 72 mit einer Eingriffsvertiefung für ein entsprechendes Werkzeug und eine zylindrische Kopfaußenfläche 73 auf. Die Kopffläche 72 geht über eine erste umlaufende Kante 74 in die Kopfaußenfläche 73 über und die Kopfaußenfläche 73 geht über eine zweite umlaufende Kante 75 in die Kopfauflagefläche 30 über. Der Schraubenschaft 29 weist von dem Schraubenkopf 28 aus gesehen zunächst einen sich konisch verjüngenden Schraubenschaftabschnitt 31 auf, dessen Außenfläche glatt ist, also kein Gewinde aufweist. An den Schraubenschaftabschnitt 31 schließt sich ein erster zylindrischer Schraubenschaftabschnitt 32 an, dessen Außenfläche ebenfalls glatt ist. Und an den zylindrischen Schraubenschaftabschnitt 32 schließt sich ein zweiter zylindrischer Schraubenschaftabschnitt 33 an, der ein Außengewinde 34 aufweist. Um im Betrieb auftretende, zeitlich wechselnde Kraft- und Längenänderungen durch elastische Dehnung des Schraubenschafts 29 gut aufnehmen zu können, ist der Außendurchmesser des ersten zylindrischen Schraubenschaftabschnitts 32 zweckmäßigerweise geringer als der Kerndurchmesser des Außengewindes 34.

Des Weiteren besteht die Kopfschraube 27 aus metallischem Material, insbesondere aus Titan bzw. einer Titanlegierung, oder aus Stahl, z.B. aus warmfestem Edelstahl, oder aus Aluminium bzw. einer Aluminiumlegierung. Bevorzugt hat das Material der Kopfschraube 27 einen Wärmeausdehnungskoeffizienten α_{Schraube} von 8,0·10⁻⁵ bis 10,0·10⁻⁵ K⁻¹, insbesondere 9,0·10⁻⁵ bis 9,5·10⁻⁵ K⁻¹.

Die erste Dehnungskompensationsscheibe 13 (Fig. 3) ist als Ringscheibe ausgebildet und weist eine erste Scheibenstirnfläche 35, eine dieser gegenüberliegende zweite Scheibenstirnfläche 36, eine Scheibenumfangsfläche 37 und eine mittige, von der ersten zur zweiten Scheibenstirnfläche 35;36 durchgehende Scheibenaussparung 38 mit einer Scheibenaussparungsachse 39 auf. Die beiden Scheibenstirnflächen 35;36 sind insbesondere ebenflächig und senkrecht zur Scheibenaussparungsachse 39 ausgebildet. Die Scheibenumfangsfläche 37 ist vorzugsweise zylindrisch ausgebildet und geht über eine Fase 40 in die zweite Scheibenstirnfläche 36 über. Die Scheibenaussparung 38 weist eine Aussparungsfläche 41 auf, die von der ersten Scheibenstirnfläche 35 aus gesehen zunächst einen ersten, kegelförmigen, sich konisch zur zweiten Scheibenstirnfläche 36 hin verjüngenden Flächenabschnitt 42 und einen sich daran anschließenden zweiten, zylindrischen Flächenabschnitt 43 auf. Flächenabschnitt 42 dient zur Auflage der Kopfauflagefläche 30 der Kopfschraube 27. Infolgedessen entspricht die Steigung bzw. Neigung des ersten Flächenabschnitts 42 bevorzugt der Steigung bzw. Neigung der Kopfauflagefläche 30.

Des Weiteren besteht die erste Dehnungskompensationsscheibe 13 vorzugsweise aus metallischem Material, z.B. einer Metalllegierung, insbesondere aus Stahl, insbesondere aus warmfestem Edelstahl, oder aus Aluminium bzw. einer Aluminiumlegierung. Bevorzugt weist das Material der ersten Dehnungskompensationsscheibe 13 einen Wärmeausdehnungskoeffizienten α_{Scheibe1} von 15,0.10⁻⁵ bis 19,0·10⁻⁵ K⁻¹, insbesondere 16,5·10⁻⁵ bis 17,0·10⁻⁵ K⁻¹ auf.

Die zweite Dehnungskompensationsscheibe 15 (Fig. 4) ist ebenfalls als Ringscheibe ausgebildet und weist eine erste Scheibenstirnfläche 44, eine dieser gegenüberliegende zweite Scheibenstirnfläche 45, eine Scheibenumfangsfläche 46 und eine mittige, von der ersten zur zweiten Scheibenstirnfläche 44;45 durchgehende Scheibenaussparung 47 mit einer Scheibenaussparungsachse 48 auf. Die beiden Scheibenstirnflächen 44;45 sind insbesondere ebenflächig und senkrecht zur Scheibenaussparungsachse 48 ausgebildet. Die Scheibenaussparung 47 weist eine Aussparungsfläche 52 auf, die bevorzugt durchgehend zylindrisch ausgebildet ist. Des Weiteren weist die zweite Dehnungskompensationsscheibe 15 vorzugsweise einen ringförmigen bzw. rohrförmigen bzw. hohlzylindrischen Bund 49 auf, der sich an die zweite Scheibenstirnfläche 45 anschließt und von dieser, im wesentlichen in einer zur Scheibenaussparungsachse 48 parallelen Richtung, absteht. Der Bund 49 weist eine zylindrische Bundinnenfläche 50 und eine Bundaußenfläche 51 auf, die sich kontinuierlich an die Scheibenumfangsfläche 46 anschließt. Insbesondere weist die Bundaußenfläche 51 von der zweiten Scheibenstirnfläche 45 aus gesehen einen sich konisch verjüngenden Verlauf auf. Die Scheibenumfangsfläche 46 weist insbesondere von der ersten Scheibenstirnfläche 44 aus gesehen zunächst einen zylindrischen Abschnitt und einen sich darin anschließenden, sich konisch verjüngenden Abschnitt auf. Dies dient zur strömungstechnischen Optimierung des Luftstroms, der an der Bodenunterseite 6 entlang strömt bei der oszillierenden Bewegung des Hubkolbens 1. Infolgedessen ist auch der Verlauf der Bodenunterseite 6 strömungstechnisch optimiert.

Des Weiteren besteht die zweite Dehnungskompensationsscheibe 15 vorzugsweise ebenfalls aus metallischem Material, z.B. einer Metallegierung,, insbesondere aus Stahl, insbesondere aus warmfestem Edelstahl, oder aus Aluminium bzw. einer Aluminiumlegierung. Bevorzugt weist das Material der zweiten Dehnungskompensationsscheibe 15 einen Wärmeausdehnungskoeffizienten α_{Scheibe2} von 15,0·10⁻⁵ bis 19,0·10⁻⁵ K⁻¹, insbesondere 16,5·10⁻⁵ bis 17,0·10⁻⁵ K⁻¹ auf. Bevorzugt bestehen die beiden Dehnungskompensationsscheiben 13;15 aus demselben Material. Sie können aber auch aus unterschiedlichem Material bestehen.

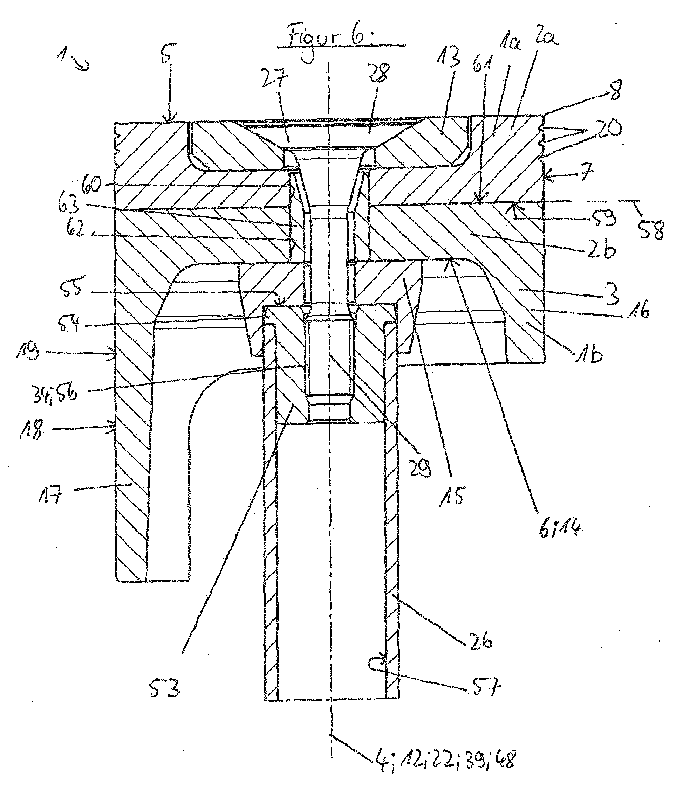

Die Kolbenstange 26 ist bevorzugt rohrförmig bzw. hohlzylindrisch ausgebildet und weist eine, insbesondere zylindrische, Stangeninnenfläche 57 und eine, insbesondere zylindrische, Stangenaußenfläche 58 auf. Des Weiteren weist die Kolbenstange 26 zumindest an ihrem dem Hubkolben 1 zugewandten Stangenende eine Gewindebuchse 53 auf, die formschlüssig in die Kolbenstange 26 eingesetzt, insbesondere eingeschweißt oder hart eingelötet ist. Die Gewindebuchse 53 weist eine mittige, durchgehende Buchsenaussparung mit einem zum Außengewinde 34 der Kopfschraube 27 korrespondierendem Innengewinde 56 auf (Fig. 6,9). Zudem weist die Gewindebuchse 53 vorzugsweise einen Buchsenbund 54 mit einer ebenflächigen Stirnfläche 55 auf (Fig. 6,9). Die Gewindebuchse besteht vorzugsweise aus metallischem Material, insbesondere hochfestem Stahl und die Kolbenstange 26 besteht vorzugsweise ebenfalls aus metallischem Material, insbesondere hochfestem Stahl.

Im zusammengebauten Zustand, also im Betrieb der Hubkolbenmaschine, ist der Hubkolben 1 mittels der Kopfschraube 27 mit der Kolbenstange 26 derart verschraubt, dass der Hubkolben 1 und die Kolbenstange 26 lösbar, aber starr miteinander verbunden sind. Dabei ist zwischen die beiden zu verbindenden Teile zumindest eine, vorzugsweise sind zwei Dehnungskompensationsscheiben 14;15 eingespannt.

Insbesondere ist die erste Dehungskompensationsscheibe 13 derart in der Vertiefung 9 angeordnet, dass die zweite Scheibenstirnfläche 36 auf der Vertiefungsbodenfläche 10 aufliegt und die Scheibenaussparung 38 in einer zur Kolbenachse 4 parallelen Richtung fluchtend zur Bodenaussparung 21 ist. Die erste Scheibenstirnfläche 35 schließt vorzugsweise bündig mit der Bodenfläche 5 ab. Zudem ist der Durchmesser der Vertiefungsumfangsfläche 11 größer als der Durchmesser der Scheibenumfangsfläche 37, so dass zwischen der Vertiefungsumfangsfläche 11 und der Scheibenumfangsfläche 37 ein erster Ringsspalt vorhanden ist. Der erste Ringspalt ist deshalb notwendig, da der Wärmeausdehnungskoeffizient α_{Scheibe1} der ersten Dehungskompensationsscheibe 13 größer ist als der Wärmeausdehnungskoeffizient α_{kolben} des Kolbens 1. Dadurch dehnt sich die erste Dehungskompensationsscheibe 13 bei Temperaturbelastung mehr aus als der Hubkolben 1. Um sicher zu stellen, dass die erste Dehungskompensationsscheibe 13 sich nicht bis zur Vertiefungsumfangsfläche 11 ausdehnt und gegen diese gedrückt wird, so dass Spannungen im Hubkolben 1 entstehen, muss der erste Ringspalt bei Raumtemperatur entsprechend dimensioniert werden.

Die zweite Dehungskompensationsscheibe 15 liegt mit ihrer ersten Scheibenstirnfläche 44 an der Anlagefläche 14 des Hubkolbens 1 an, wobei die Scheibenaussparung 47 ebenfalls in einer zur Kolbenachse 4 parallelen Richtung fluchtend zur Bodenaussparung 21 angeordnet ist. Die Kolbenbodenwandung 2 ist somit zwischen der ersten und zweiten Dehungskompensationsscheibe 13; 15 angeordnet bzw. eingespannt.

Des Weiteren ist die Kolbenstange 26 mit ihrem einen, dem Hubkolben 1 zugewandten, Stangenende formschlüssig innerhalb des Scheibenbunds 49 angeordnet, wobei die Stirnfläche 55 des Buchsenbunds 54 an der zweiten Scheibenstirnfläche 45 anliegt und die Bundinnenfläche 50 des Scheibenbunds 49 an der Stangenaußenfläche 58 anliegt, so dass die Kolbenstange 26 zentriert wird zur zweiten Dehungskompensationsscheibe 15.

Die Kopfschraube 27 verspannt den Hubkolben 1, die beiden Dehnungskompensationsscheiben 13; 15 und die Kolbenstange 26 miteinander. Dazu ist der Schraubenkopf 28 innerhalb der Scheibenaussparung 38 der ersten Dehungskompensationsscheibe 13 angeordnet, wobei die Kopfauflagefläche 30 des Schraubenkopfes 28 auf dem konischen Flächenabschnitt 42 der Scheibenaussparung 38 aufliegt. Aufgrund des geringen Steigungswinkels β besteht zwischen der Kopfauflagefläche 30 und dem konischen Flächenabschnitt 42 eine relativ große Auflagefläche, so dass die Kraft der Kopfschraube 27 gut verteilt wird und keine zu hohen Kräfte auf die Vertiefungsbodenfläche 10 des keramischen Hubkolbens 1 wirken. Der Schraubenschaft 29 erstreckt sich mit dem ersten und zweiten Schraubenschaftabschnitt 31;32 durch die übrige Scheibenaussparung 38 der ersten Dehungskompensationsscheibe 13, die Bodenaussparung 21 und die Scheibenaussparung 47 der zweiten Dehungskompensationsscheibe 15 hindurch. Insbesondere ist der erste Schraubenschaftabschnitt 31 innerhalb des konischen Bereichs der zweiten Aussparungsfläche 23 der Bodenaussparung 21 angeordnet und der zweite Schraubenschaftabschnitt 32 ist insbesondere innerhalb des zylindrischen Bereichs der zweiten Aussparungsfläche 23 und der Scheibenaussparung 47 der zweiten Dehnungskompensationsscheibe 15 angeordnet. Dabei sind die Außendurchmesser der Schraubenschaftabschnitte 31;32 jeweils geringer als die Durchmesser der sie umgebenden Flächen 23;43, so dass zwischen den Schraubenschaftabschnitten 31;32 und den diese umgebenden Flächen 23;43 ein zweiter Ringspalt vorhanden ist. Der zweite Ringspalt ist im Bereich zwischen Kolben 1 und Schraubenschaft 29 deshalb notwendig, da der Wärmeausdehnungskoeffizient α_{schraube} der Kopfschraube 27 größer ist als der Wärmeausdehnungskoeffizient α_{Kolben} des Kolbens 1. Dadurch dehnt sich die Kopfschraube 27, insbesondere der Schraubenschaft 29, bei Temperaturbelastung mehr aus als der Hubkolben 1. Um sicher zu stellen, dass der Schraubenschaft 29 sich nicht bis zur Aussparungsfläche 23 der Bodenaussparung 21 ausdehnt und gegen diese gedrückt wird, so dass Spannungen im Hubkolben 1 entstehen, muss der zweite Ringspalt bei Raumtemperatur entsprechend dimensioniert werden.

Der dritte Schraubenschaftabschnitt 32 ist mit seinem Außengewinde 34 in das Innengewinde 56 der Gewindebuchse 53 der Kolbenstange 26 eingeschraubt, so dass die Kopfschraube die Kolbenstange 26, die beiden Dehnungskompensationsscheiben 13; 15 und den Hubkolben 1 miteinander verspannt.

Bei der Verbindung zwischen dem Hubkolben 1 und der Kolbenstange 26 ist problematisch, dass die Herstellung und Montage der einzelnen Teile in der Regel bei Raumtemperatur erfolgt, die Teile aber beim Betrieb der Hubkolbenmaschine höheren Temperaturen ausgesetzt sind. Da der Wärmeausdehnungskoeffizient α_{Schraube} der metallischen Kopfschraube 27 materialbedingt größer ist als der Wärmeausdehnungskoeffizient α_{Kolben} des keramischen Kolbens 1, dehnt sich die Kopfschraube 27 bei Temperaturbelastung im Betrieb, insbesondere im Laufe der Erwärmung von Raumtemperatur auf Betriebtemperatur, insbesondere in einer zur Kolbenachse 4 parallelen Richtung, prozentual und betragsmäßig mehr als der Kolben 1. Ohne die Dehnungskompensationsscheiben 13;15 würde dies zu einer deutlichen Verringerung bis zum Verlust der Spannkraft und zum Lösen der Schraubverbindung führen. Erfindungsgemäß sind die Wärmeausdehnungskoeffizienten α_{Scheibe1} und α_{Scheibe2} der beiden Dehnungskompensationsscheiben 13;15 deshalb größer als der Wärmeausdehnungskoeffizient α_{Schraube} der Kopfschraube 27, so dass diese sich prozentual und betragsmäßig mehr dehnen als die Kopfschraube 27. Die deutlich geringere Dehnung des Hubkolbens 1 im Vergleich zur Kopfschraube 27 wird also durch die hohen Dehnungen der beiden Dehnungskompensationsscheiben 13;15 ausgeglichen bzw. kompensiert.

Maßgeblich sind dabei jeweils die Längenänderungen der eingespannten Bereiche, wobei die Länge jeweils die Ersteckung parallel zur Kolbenachse 4 ist. Gemäß der Erfindung wurde für eine überschlagsmäßige Auslegung die Längenänderung ΔL_{Kolben} des Hubkolbens 1 im eingespannten Bereich, also dem Bereich zwischen der Vertiefungsbodenfläche 10 und der Anlagefläche 14, dessen Länge bei Raumtemperatur L_{0,Kolben} (Fig. 1) beträgt, die Längenänderung ΔL_{Scheibe1} der ersten Dehnungskompensationsscheibe 13 im eingespannten Bereich, also dem Bereich zwischen der ersten Kante 74 des Schraubenkopfes 28 bzw. dem kopfseitigen Beginn der Kopfauflagefläche 30 und der zweiten Scheibenstirnfläche 36, dessen Länge bei Raumtemperatur L_{0,Scheibe1} (Fig. 1) beträgt, die Längenänderung ΔL_{Scheibe2} der zweiten Dehnungskompensationsscheibe 15 im eingespannten Bereich, also dem Bereich zwischen der ersten Scheibenstirnfläche 44 und der zweiten Scheibenstirnfläche 45, dessen Länge bei Raumtemperatur L_{0,Scheibe2} (Fig. 1) beträgt, und die Längenänderung ΔL_{Schraube} der Kopfschraube 27 im einspannenden Bereich, dessen Länge bei Raumtemperatur L_{0,Schraube} (Fig. 1) beträgt, berücksichtigt. Der einspannende Bereich der Kopfschraube 27 wurde für die überschlagsmäßige Auslegung als Bereich zwischen der ersten Kante 74 des Schraubenkopfes 28 bis zum Beginn des Außengewindes 34 zuzüglich einem Viertel der Einschraubtiefe der Kopfschraube 27 festgelegt.

Für die Längenänderungen ΔL_{Schraube}, Δl_{Scheibe1}, ΔL_{Scheibe2} und ΔL_{Kolben} der eingespannten Längen L_{0,Scheibe1}, L_{0,Scheibe2}, L_{0,Kolben} und der einspannenden Länge L_{0,Schraube} bei Erwärmung der einzelnen Teile 1;13;15;27 von Raumtemperatur auf Nennbetriebstemperatur, also auf diejenige Betriebstemperatur, die die Hubkolbenmaschine im Dauerbetrieb bei Nenndrehzahl erreicht, gilt dabei: ΔL_{Schraube} - (ΔL_{Scheibe1} + ΔL_{Scheibe2} + ΔL_{Kolben})= ΔL_{gesamt}, wobei vorzugsweise 0,01 mm ≤ |ΔL_{gesamt} |≤0,03 mm. Vorzugsweise gilt ΔL_{gesamt} < 0. Die Nenndrehzahl ist dabei die Drehzahl, bei der der Hubkolbenmotor bei Volllast die größtmögliche Leistung, die Nennleistung, abgibt bzw. beim Hubkolbenkompressor die Betriebsdrehzahl.

Dabei wurden für die überschlagsmäßige Auslegung mittlere Betriebstemperaturen der einzelnen Bauteile angenommen.

Für n Scheiben gilt: ΔL_{Scheiben} =ΔL_{Scheibe1} + ΔL_{Scheibe2} + ......... +ΔL_{Scheibe,n} und somit: ΔL_{Schraube} - (ΔL_{Scheiben} + ΔL_{Kolben}) = ΔL_{gesamt}

Insbesondere sind die Wärmeausdehnungskoeffizienten α_{Schraube}, α_{Scheibe1}, α_{Scheibe2} und α_{Kolben} und insbesondere die Längen L_{0,S}chraube, L_{0,S}cheibe1, L_{0,Scheibe 1,} L_{0,Kolben} des einspannenden Bereichs der Kopfschraube 27 und der eingespannten Bereiche des Hubkolbens 1 und der beiden Dehnungskompensationsscheiben 13;15 parallel zur Kolbenachse 4 so bemessen, dass die Spannkraft bei Erhöhung der Temperatur von Raumtemperatur auf die Nennbetriebstemperatur weitgehend erhalten bleibt bzw. nur geringfügig ab- oder zunimmt. Vorzugsweise nimmt die Spannkraft bei Erwärmung von Raumtemperatur auf Nennbetriebstemperatur zu.

Dabei dürfen α_{Scheibe1} und α_{Scheibe2} aber auch nicht zu groß gewählt werden, denn eine zu große Abnahme der Spannkraft würde zwar zum Lösen der Verbindung führen, aber eine zu große Erhöhung der Spannkraft würde aufgrund der Sprödigkeit des keramischen Materials zum Bruch des Hubkolbens 1 führen. Bei der Auslegung ist dabei zu beachten, dass die Betriebstemperaturen der einzelnen Teile 1;13;15;27 unter anderem aufgrund des unterschiedlichen Abstands zur Bodenfläche 5 und somit zum Brennraum unterschiedlich sein können und die einzelnen Teile 1;13;15;27 selber zudem eine Temperaturverteilung aufweisen können. Zudem müssen bei einer genauen Auslegung auch die Längenänderung der Kopfschraube 28 im Bereich des gesamten Gewindes 34 und die Längenänderungen der eingespannten Bereiche der Kolbenstange 26 und der Gewindebuchse 53 im Bereich des Gewindes 34 berücksichtigt werden. Das heißt die Längenänderungen der einzelnen Teile müssen bei den jeweiligen Betriebtemperaturen und Temperaturverteilungen bestimmt werden.

Gemäß einer weiteren Ausführungsform der Erfindung (Figur 6) ist der Hubkolben 1 in einer zur Kolbenachse 4 parallelen Richtung gesehen zweigeteilt ausgeführt und weist einen ersten, brenn- bzw. kompressionsraumseitigen Kolbenteil 1 a und einen zweiten kurbeltriebseitigen Kolbenteil 1 b auf, die miteinander verspannt sind. Insbesondere ist der Hubkolben 1 im Bereich der Kolbenbodenwandung 2 geteilt. Eine Trennebene 58 ist insbesondere senkrecht zur Kolbenachse 4. Zudem liegt die Trennebene 58 zwischen der Bodenfläche 5 und der Bodenunterseite 6. Dadurch weist der Hubkolben 1 einen ersten Kolbenbodenwandungsteil 2a und einen zweiten Kolbenbodenwandungsteil 2b auf. Insbesondere bildet der erste Kolbenteil 1 a den ersten Kolbenbodenwandungsteil 2a und der zweite Kolbenteil 1 b weist den zweiten Kolbenbodenwandungsteil 2b auf. Der erste Kolbenteil 1a bzw. der erste Kolbenbodenwandungsteil 2a weist die Bodenfläche 5 und eine dieser axial gegenüberliegende erste, insbesondere ebenflächige, Trennfläche 59 sowie bevorzugt die Nuten 20 auf. Die erste Trennfläche 59 geht über eine erste, umlaufende Umfangskante 64 in die Bodenwandungsaußenfläche 7 des ersten Kolbenbodenwandungsteil 2a über. Zudem weist der erste Kolbenbodenwandungsteil 2a eine ersten Teil bzw. Aussparungsabschnitt 60 der Bodenaussparung 21 auf, der von der Bodenfläche 5 bis zur Trennfläche 59 durchgeht. Der zweite Kolbenteil 1 b weist die Bodenunterseite 6 und eine dieser axial gegenüberliegende zweite, insbesondere ebenflächige, Trennfläche 61 sowie den Kolbenschaft 3 auf. Die zweite Trennfläche 61 geht über eine zweite, umlaufende Umfangskante 65 in die Bodenwandungsaußenfläche 7 des zweiten Kolbenbodenwandungsteils 2b über. Zudem weist der zweite Kolbenbodenwandungsteil 2b einen zweiten Teil bzw. Aussparungsabschnitt 62 der Bodenaussparung 21 auf, der von der Bodenunterseite 6 bis zur zweiten Trennfläche 61 durchgeht. Die beiden Aussparungsabschnitte 60;62 sind in einer zur Kolbenachse 4 parallelen Richtung zueinander fluchtend angeordnet und bilden die Bodenaussparung 21. Dabei weisen die beiden Aussparungsabschnitte 60;62 vorzugsweise denselben Durchmesser auf, so dass die Bodenaussparung 21 durchgehend zylindrisch ausgebildet ist. Des Weiteren ist zweckmäßigerweise zur Zentrierung der beiden Kolbenteile 1a;1b bzw. der beiden Kolbenbodenwandungsteile 2a;2b zueinander eine Zentrierhülse 63 vorhanden. Die Zentrierhülse 63 ist innerhalb der Bodenaussparung 21, also der beiden Aussparungen 60;62, angeordnet. Dabei entspricht der Außendurchmesser der Zentrierhülse 63 dem Durchmesser der Aussparungsfläche 23 der Bodenaussparung 21. Die Innenfläche der Zentrierhülse 63 weist vorzugsweise in axialer Richtung in Bezug zur Aussparungsachse 22 gesehen zunächst einen sich konisch verjüngenden Abschnitt und einen sich daran anschließenden zylindrischen Abschnitt auf. Zudem sind die Durchmesser der Innenfläche so bemessen, dass die Innenfläche von dem ersten und zweiten Schraubenschaftabschnitt 31;32 beabstandet ist. Die Länge der Zentrierhülse 63 bei Raumtemperatur in axialer Richtung in Bezug zur Kolbenachse 4 entspricht insbesondere der Erstreckung der Bodenaussparung 21 in axialer Richtung in Bezug zur Kolbenachse 4. Da der Außendurchmesser der Zentrierhülse 63 geringer ist als der Durchmesser des zweiten Flächenabschnittes 43 kann sich die Zentrierhülse 63 bei Temperaturbelastung in axialer Richtung auf die Bodenfläche 5 zu frei dehnen. Zudem besteht die Zentrierhülse 63 vorzugsweise aus metallischem Material, insbesondere aus Titan bzw. einer Titanlegierung.

Die beiden Kolbenteile 1 a;1 b, insbesondere die beiden Kolbenbodenwandungsteile 2a;2b, werden ebenfalls mittels der Kopfschraube 27 miteinander verspannt. Dabei kann zusätzlich eine Verdrehsicherung, z.B. ein Passtift (nicht dargestellt) vorhanden sein, um eine Verdrehung der beiden Kolbenteile 1a;1b gegeneinander zu verhindern. Da gemäß der Erfindung aber die Spannkraft auch bei Betriebstemperatur erhalten bleibt oder sich nur geringfügig ändert, reicht die Spannkraft aus, um eine Verdrehung der beiden Kolbenteile 1a;1b gegeneinander zu verhindern und eine Verdrehsicherung ist nicht unbedingt notwendig.

Vorteil bei der geteilten Ausführungsform ist, dass die beiden Umfangskanten 64;65 eine Blow-by Behinderung darstellen, ohne dass ein Kolbenring notwendig ist. Außerdem ist es z.B. bei Beschädigung der Bodenfläche 5 möglich, lediglich den ersten Kolbenteil 1 auszutauschen, was Kosten spart.

Gemäß einer weiteren Ausführungsform (Figur 9) ist der Kolben 1 ebenfalls analog zur vorherigen Ausführungsform geteilt ausgebildet. Außerdem weist der erste Kolbenbodenwandungsteil 2a einen umlaufenden Stufenabsatz 66 auf, der sich von der ersten Trennfläche 59 her in axialer und radialer Richtung von außen in Bezug zur Kolbenachse 4 in das erste Kolbenbodenwandungsteil 2a hinein erstreckt. Der Stufenabsatz 66 ist somit radial einspringend ausgebildet und weist vorzugsweise eine erste, ebenflächige, sich senkrecht zur Kolbenachse 4 erstreckende Stufenfläche 67 und eine zweite, zur ersten Stufenfläche 67 senkrechte, zylindrische Stufenfläche 68 auf. Im zusammen gebauten Zustand bilden die erste und zweite Stufenfläche 67;68 sowie ein radial äußerer Teilbereich der zweiten Trennfläche 61 eine umlaufende Kolbenringnut 69 zur Aufnahme eines Kolbenringes 70. Der Kolbenring 70 besteht vorzugsweise aus keramischem Material, insbesondere aus Kohlenstoffwerkstoff. Insbesondere für Kolbenringe aus Keramik ist diese Ausführungsform mit dem zweigeteilten Kolben 1 besonders vorteilhaft, da deren Elastizität oft nicht ausreicht, um sie zur Montage außen über den Kolben 1 zu bringen.

Vorteil der Erfindung ist zum einen, dass durch eine gezielte Materialauswahl, Anordnung und Dimensionierung der Dehnungskompensationsscheiben eine dauerhafte Verbindung des Hubkolbens 1 mit der Kolbenstange 26 auch im Betrieb der Hubkolbenmaschine gewährleistet ist. Die erfindungsgemäße Verbindung gleicht die unterschiedlichen Temperaturdehnungen des Hubkolbens 1 und der Kopfschraube 27 aus. Ein Lösen der Verbindung wird vermieden. Auch wird vermieden, dass der Hubkolben aufgrund der Sprödigkeit des keramischen Materials wegen zu hoch aufgebrachter anfänglicher Spannkraft bricht. Denn ein übermäßiges Anziehen der Kopfschraube 27 bei der Montage, die bei Raumtemperatur erfolgt, um beim Betrieb die optimale Spannkraft zu haben, ist nicht notwendig. Gewährleistet wird dies dadurch, dass der Wärmeausdehnungskoeffizient α_{Schraube} der Kopfschraube 27 und die Wärmeausdehnungskoeffizienten α_{Scheibe2 Scheibe1};α_{Kolben}; α_{Kolbenstange;}α_{Gewindebuchse} der mittels der Kopfschraube 27 verspannten Bauteile 1;13;15;26;53, insbesondere der Dehnungskompensationsscheiben 13;15, sowie die eingespannten Längen dieser Bauteile 1;13;15;26;53 und die einspannende Länge der Kopfschraube 27 so bemessen sind, dass die Differenz der Spannkraft der Kopfschraube 27 bei Raumtemperatur zu der Spannkraft bei Nennbetriebstemperatur der Hubkolbenmaschine, die die Hubkolbenmaschine im Dauerbetrieb bei Nenndrehzahl aufweist, <0 ist.

Im Rahmen der Erfindung liegt es selbstverständlich auch, die Kolbenstange massiv auszuführen. In diesem Fall ist das zur Verschraubung notwendige Innengewinde direkt in die Kolbenstange am Ende der Kolbenstange eingebracht.

Außerdem liegt es im Rahmen der Erfindung, dass die beiden Kolbenbodenwandungsteile 2a;2b nicht entlang einer ebenflächigen Trennebene geteilt sind, sondern die Trennflächen 59;61 konturiert und zueinander korrespondierend ausgebildet sind. In diesem Fall könnte die Zentrierhülse 63 entfallen.

Eine Schraube ist ein zylindrischer Stift oder Bolzen, auf dem ein Gewinde aufgebracht ist. Bei Schrauben mit Kopf ("Kopfschrauben") dient die Ringfläche unter dem Kopf als axialer Anschlag und der Gewindestift bildet den Schraubenschaft. Im Rahmen der Erfindung muss nicht notwendigerweise eine Kopfschraube 27 verwendet werden. Dahingegen kann auch eine Schraube ohne Schraubenkopf, die lediglich einen Gewindestift bzw. Gewindebolzen 76 mit Außengewinde aufweist, insbesondere in Kombination mit einer Mutter 77 verwendet werden. Die metallische Mutter 77 und der metallische Gewindestift 76 bestehen dabei vorzugsweise aus demselben Material, insbesondere analog zur Kopfschraube 27 aus Titan oder einer Titanlegierung. Bei dieser Ausführungsform ist beispielsweise der Gewindestift 76 einendig in das Innengewinde 56 der Gewindebuchse 53 eingeschraubt und andernendig ist auf den Gewindestift 76 anstelle des Schraubenkopfes die Mutter 77 aufgeschraubt (nicht dargestellt), so dass die einzelnen Teile miteinander verspannt werden.

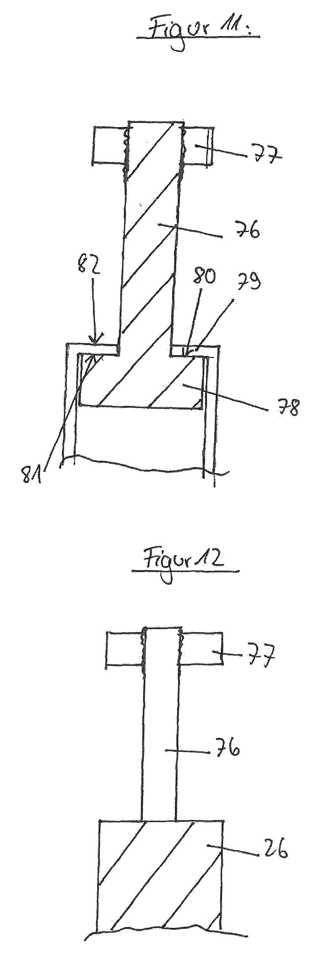

Gemäß einer alternativen Ausführungsform (Fig. 11) ist der Gewindestift 76 einendig, an seinem der Kolbenstange 26 zugewandten Ende, verdickt bzw. verbreitert ausgebildet und weist einendig einen verbreiterten, insbesondere vollzylindrischen, Endbereich 78 auf. Der Endbereich 78 ist vorzugsweise einstückig mit dem Gewindestift 76 ausgebildet. Die Kolbenstange 26 weist an ihrem dem Kolben 1 zugewandten Ende eine ringförmige Bodenwandung 79 mit einer mittigen Ringöffnung auf, wobei die Bodenwandung 79 die hohlzylindrische Kolbenstange 26 abschließt. Der Gewindestift 76 ist von dem dem Kolben 1 gegenüberliegenden Stangenende in die Kolbenstange 26 eingeführt, wobei der verbreiterte Endbereich 78 formschlüssig in der Kolbenstange 26 angeordnet ist und mit einer dem Kolben 1 zugewandten, ringförmigen Endfläche 80 innen an einer ersten, inneren Bodenwandungsinnenfläche 81 der Bodenwandung 79 anliegt. Der übrige Gewindestift 76 ragt durch die Ringöffnung der Bodenwandung 79 aus der Kolbenstange 26 raus und erstreckt sich analog zum Schraubenschaft 28 durch die beiden Dehnungskompensationsscheiben 18;14 und den Kolben 1 hindurch (nicht dargestellt). Durch Aufschrauben der Mutter 77 auf das andere Ende des Gewindestiftes 76 werden die beiden Dehnungskompensationsscheiben 13;14 und der Kolben 1 mit der Kolbenstange 26 verspannt. Dabei liegt eine zweite, äußere Bodenwandungsinnenfläche 82 der Bodenwandung 79 an der zweite Scheibenstirnfläche 45 an.

Anstelle des verdickten Endbereichs 78 kann der Gewindestift 76 z.B. auch mit dem dem Kolben 1 zugewandten Stangenende der Kolbenstange 26 fest verbunden sein, z.B. an dieses angeformt sein (Fig. 12). Die Kolbenstange 26 ist dann vorzugsweise massiv ausgeführt.

Bei der Verwendung des Gewindestifts 76 als Schraube muss die, insbesondere überschlagsmäßige, Berechnung der Längenänderungen entsprechend angepasst werden. Je nach Gegenbenheiten muss z.B. die Längenänderung der Mutter 77 berücksichtigt werden.

Die erfindungsgemäße Anordnung ist zudem sowohl für nach dem 2-Takt Prinzip als auch für nach dem 4-Takt Prinzip arbeitende Hubkolbenmaschinen, insbesondere Hubkolbenmotoren geeignet. Zudem ist sie nicht nur für Hubkolbenmaschinen mit Kurbelschlaufentrieb geeignet, sondern für jegliche Art von Hubkolbenmaschinen, bei denen die Kolbenstange starr mit dem Kolben verbunden und insbesondere gerade geführt ist, z.B. auch für Kreuzkopfmotoren oder Motoren mit Hypozykloidengeradführung. Die Erfindung ist dabei selbstverständlich nicht auf Hubkolbenverbrennungsmotoren bzw. Hubkolbenbrennkraftmaschinen beschränkt, sondern kann auch bei Hubkolbenkompressoren, z.B. Sauerstoffkompressoren, oder Hubkolbenpumpen oder Hubkolbendampfmotoren, z.B. einem Dampfmotor von Murray, eingesetzt werden.

## Patentansprüche

1. Hubkolben (1) aus keramischem Material für eine Hubkolbenmaschine mit Kurbeltrieb, insbesondere mit Kurbelschlaufentrieb, wobei der Hubkolben (1) mit einer Kolbenstange (26) über eine Schraube (27;76), insbesondere eine Kopfschraube (27), starr verschraubt ist, wobei zwischen dem Hubkolben (1) und der Kolbenstange (26) zumindest eine Scheibe (13; 15) aus metallischem Material eingespannt ist,
**dadurch gekennzeichnet, dass**
die Schraube (27;76) aus metallischem Material besteht, wobei der Wärmeausdehnungskoeffizient α_{Kolben} des Materials des Hubkolbens (1) geringer ist als der Wärmeausdehnungskoeffizient α_{Schraube} des Materials der Schraube (27; 76) und die Scheibe (13;15) eine Dehnungskompensationsscheibe (13;15) ist, wobei der Wärmeausdehnungskoeffizient α_{Scheibe1;2} des Materials der Dehnungskompensationsscheibe (13;15) größer ist als der Wärmeausdehnungskoeffizient α_{Schraube} des Materials der Schraube (27;76).

2. Hubkolben (1) nach Anspruch 1,
**dadurch gekennzeichnet, dass**
zwei Dehnungskompensationsscheiben (13; 15) vorhanden sind, wobei der Hubkolben (1) zwischen den beiden Dehnungskompensationsscheiben (13; 15) eingespannt ist.

3. Hubkolben (1) nach Anspruch 1 oder 2,
**dadurch gekennzeichnet, dass**
der Wärmeausdehnungskoeffizient α_{Kolben} 3,0·10⁻⁶ bis 6,5·10⁻⁶K⁻¹, bevorzugt 4,5·10⁻⁶ bis 5,0·10⁻⁶ K⁻¹ beträgt.

4. Hubkolben (1) nach einem der vorhergehenden Ansprüche,
**dadurch gekennzeichnet, dass**
der Wärmeausdehnungskoeffizient α_{Schraube} 8,0·10⁻⁵ bis 10,0·10⁻⁵·K⁻¹, bevorzugt 9,0·10⁻⁵ bis 9,5·10⁻⁵ K⁻¹ beträgt.

5. Hubkolben (1) nach einem der vorhergehenden Ansprüche,
**dadurch gekennzeichnet, dass**
der Wärmeausdehnungskoeffizient α_{Scheibe1} der ersten Dehungskompensationsscheibe (13) 15,0·10⁻⁵ bis 19,0·10⁻⁵ K⁻¹, bevorzugt 16,5·10⁻⁵ bis 17,0·10⁻⁵K⁻¹ beträgt.

6. Hubkolben (1) nach einem der vorhergehenden Ansprüche,
**dadurch gekennzeichnet, dass**
der Wärmeausdehnungskoeffizient α_{Scheibe2} der zweiten Dehungskompensationsscheibe (15) 15,0·10⁻⁵ bis 19,0·10⁻⁵ K⁻¹, bevorzugt 16,5·10⁻⁵ bis 17,0·10⁻⁵ K⁻¹ beträgt.

7. Hubkolben (1) nach einem der vorhergehenden Ansprüche,
**dadurch gekennzeichnet, dass**
der Hubkolben (1) aus einem Kohlenstoffwerkstoff, insbesondere aus einem Graphitwerkstoff besteht.

8. Hubkolbenmaschine, insbesondere Hubkolbenmotor, insbesondere Hubkolbendampfmotor, oder Hubkolbenkompressor, mit Kurbeltrieb, insbesondere mit Kurbelschlaufentrieb,
**dadurch gekennzeichnet, dass**
die Hubkolbenmaschine einen Hubkolben (1) nach einem der vorhergehenden Ansprüche aufweist.

9. Hubkolbenmaschine nach Anspruch 8,
**dadurch gekennzeichnet, dass**
die Differenz der Spannkraft der Schraube (27; 76), insbesondere der Kopfschraube (27), bei Raumtemperatur zu der Spannkraft bei Nennbetriebstemperatur der Hubkolbenmaschine,
die die Hubkolbenmaschine im Dauerbetrieb bei Nenndrehzahl aufweist, <0 ist,

10. Hubkolbenmaschine nach Anspruch 8 oder 9,
**dadurch gekennzeichnet, dass**
dass der Wärmeausdehnungskoeffizient α_{Schraube} der Kopfschraube (27) und die Wärmeausdehnungskoeffizienten α_{Scheibe2}, _{Scheibe1}; α_{Kolben}; α_{Kolbenstange}; α_{Gewindebuchse} der mittels der Kopfschraube (27) verspannten Bauteile (1;13;15;26;53) sowie die eingespannten Längen dieser Bauteile (1;13;15;26;53) und die einspannende Länge der Kopfschraube (27) so bemessen sind, dass die Differenz der Spannkraft der Kopfschraube (27) bei Raumtemperatur zu der Spannkraft bei Nennbetriebstemperatur der Hubkolbenmaschine, die die Hubkolbenmaschine im Dauerbetrieb bei Nenndrehzahl aufweist, <0 ist.

11. Hubkolbenmaschine nach einem der Ansprüche 8 bis 10,
**dadurch gekennzeichnet, dass**
die Spannkraft der Schraube (27; 76), insbesondere der Kopfschraube (27), bei Raumtemperatur kleiner ist als die Spannkraft bei Nennbetriebstemperatur der Hubkolbenmaschine.

12. Hubkolbenmaschine nach einem der Ansprüche 8 bis 11,
**dadurch gekennzeichnet, dass**
zumindest eine in einer Zylinderbohrung eines Zylinders angeordnete keramische Zylinderlaufbuchse (71) und in der Zylinderlaufbuchse (71) der Hubkolben (1), insbesondere ohne Kolbenschmierung hin und her beweglich geführt ist, wobei der Hubkolben (1) aus einem Kohlenstoffwerkstoff besteht und die Zylinderlaufbuchse (71) aus einem Siliciumcarbidwerkstoff besteht.

## Claims

1. A reciprocating piston (1) made of ceramic material for a reciprocating piston machine with a crank mechanism, in particular a Scotch yoke mechanism; the reciprocating piston (1) is rigidly screwed to a piston rod (26) by means of a screw (27; 76), in particular a cap screw (27); and at least one disc (13; 15) made of metallic material is clamped between the reciprocating piston (1) and the piston rod (26),
**characterized in that**
the screw (27; 76) is made of metallic material the thermal expansion coefficient αₚᵢₛₜₒₙ of the material of the reciprocating piston (1) is lower than the thermal expansion coefficient α_{screw} of the material of the screw (27; 76) and the disc (13; 15) is an expansion compensation disc (13; 15); and the thermal expansion coefficient α_{disc1;2} of the material of the expansion compensation disc (13; 15) is greater than the thermal expansion coefficient α_{screw} of the material of the screw (27; 76).

2. The reciprocating piston (1) according to claim 1,
**characterized in that**
two expansion compensation discs (13; 15) are provided, with the reciprocating piston (1) being clamped between the two expansion compensation discs (13; 15).

3. The reciprocating piston (1) according to claim 1 or 2,
**characterized in that**
the thermal expansion coefficient αₚᵢₛₜₒₙ is 3.0·10⁻⁶ to 6.5·10⁻⁶K⁻¹, preferably 4.5·10⁻⁶ to 5.0·10⁻⁶ K⁻¹.

4. The reciprocating piston (1) according to one of the preceding claims,
**characterized in that**
the thermal expansion coefficient α_{screw} is 8.0·10⁻⁵ to 10.0·10⁻⁵·K⁻¹, preferably 9.0·10⁻⁵ to 9.5·10⁻⁵ K⁻¹.

5. The reciprocating piston (1) according to one of the preceding claims,
**characterized in that**
the thermal expansion coefficient α_{disc1} of the first expansion compensation disc (13) is 15.0·10⁻⁵ to 19.0·10⁻⁵ K⁻¹, preferably 16.5·10⁵ to 17.0·10⁻⁵K⁻¹.

6. The reciprocating piston (1) according to one of the preceding claims,
**characterized in that**
the thermal expansion coefficient α_{disc2} of the second expansion compensation disc (15) is 15.0·10⁻⁵ to 19.0·10⁻⁵ K⁻¹, preferably 16.5·10⁻⁵ to 17.0·10⁻⁵K⁻¹.

7. The reciprocating piston (1) according to one of the preceding claims,
**characterized in that**
the reciprocating piston (1) is made of a carbon material, in particular a graphite material.

8. A reciprocating piston machine, in particular a reciprocating piston engine, in particular a reciprocating piston steam engine, or reciprocating piston compressor, with a crank mechanism, in particular a Scotch yoke mechanism,
**characterized in that**
the reciprocating piston machine has a reciprocating piston (1) according to one of the preceding claims.

9. The reciprocating piston machine according to claim 8,
**characterized in that**
the difference between the clamping force of the screw (27; 76), in particular the cap screw (27), at room temperature and the clamping force at the nominal operating temperature of the reciprocating piston machine, which the reciprocating piston machine assumes during continuous operation at the nominal speed, is <0,

10. The reciprocating piston machine according to claim 8 or 9,
**characterized in that**
the thermal expansion coefficient α_{screw} of the cap screw (27) and the thermal expansion coefficients α_{disc2, disc1}; αₚᵢₛₜₒₙ; α_{piston rod}; α_{threaded bushing} of the components (1; 13; 15; 26; 53) that are clamped by means of the cap screw (27), the clamped lengths of these components (1; 13; 15; 26; 53), and the clamping length of the cap screw (27) are dimensioned so that the difference between the clamping force of the cap screw (27) at room temperature and the clamping force at the nominal operating temperature of the reciprocating piston machine, which the reciprocating piston machine assumes during continuous operation at the nominal speed, is <0.

11. The reciprocating piston machine according to one of claims 8 through 10,
**characterized in that**
the clamping force of the screw (27; 76), in particular the cap screw (27), at room temperature is lower than the clamping force at the nominal temperature of the reciprocating piston machine.

12. The reciprocating piston machine according to one of claims 8 through 11,
**characterized in that**
at least one ceramic cylinder liner (71) is positioned in a cylinder bore of a cylinder and the reciprocating piston (1) is guided so that is able to move in reciprocating fashion in the cylinder liner (71), particularly without cylinder lubrication, the reciprocating piston (1) being made of a carbon material and the cylinder liner (71) being made of a silicon carbide material.

## Revendications

1. Piston alternatif (1) en matériau céramique pour une machine à piston alternatif comportant une transmission à bielle, en particulier une transmission à bielle en boucle, le piston alternatif (1) étant solidarisé d'une tige de piston (26) par vissage au moyen d'une vis (27 ; 76), en particulier une vis à tête (27), au moins une rondelle (13 ; 15) en matériau métallique étant serrée entre le piston alternatif (1) et la tige de piston (26),
**caractérisé en ce que**
la vis (27 ; 76) est constituée en matériau métallique, le coefficient de dilatation thermique αₚᵢₛₜₒₙ du matériau du piston alternatif (1) étant inférieur au coefficient de dilatation thermique αᵥᵢₛ du matériau de la vis (27 ; 76), et la rondelle (13 ; 15) étant une rondelle de compensation de dilatation (13 ; 15), le coefficient de dilatation thermique α_{rondelle1;2} du matériau de la rondelle de compensation de dilatation (13 ; 15) étant supérieur au coefficient de dilatation thermique αᵥᵢₛ du matériau de la vis (27 ; 76).

2. Piston alternatif (1) selon la revendication 1,
**caractérisé en ce que**
il est prévu deux rondelles de compensation de dilatation (13 ; 15), le piston alternatif (1) étant serré entre les deux rondelles de compensation de dilatation (13 ; 15).

3. Piston alternatif (1) selon la revendication 1 ou 2,
**caractérisé en ce que**
le coefficient de dilatation thermique αₚᵢₛₜₒₙ est de 3,0·10⁻⁶ à 6,5·10⁻⁶ K⁻¹, de préférence de 4,5.10⁻⁶ à 5,0·10⁻⁶K⁻¹.

4. Piston alternatif (1) selon l'une des revendications précédentes,
**caractérisé en ce que**
le coefficient de dilatation thermique αᵥᵢₛ est de 8,0.10⁻⁵ à 10,0·10⁻⁵·K⁻¹, de préférence de 9,0·10⁻⁵ à 9,5·10⁻⁵K⁻¹.

5. Piston alternatif (1) selon l'une des revendications précédentes,
**caractérisé en ce que**
le coefficient de dilatation thermique α_{rondelle1} de la première rondelle de compensation de dilatation (13) est de 15,0·10⁻⁵ à 19,0·10⁻⁵ K⁻¹, de préférence de 16,5·10⁻⁵ à 17,0·10⁻⁵K⁻¹.

6. Piston alternatif (1) selon la revendication précédente,
**caractérisé en ce que**
le coefficient de dilatation thermique α_{rondelle2} de la seconde rondelle de compensation de dilatation (15) est de 15,0·10⁻⁵ à 19,0·10⁻⁵ K⁻¹, de préférence de 16,5·10⁻⁵ à 17,0·10⁻⁵K⁻¹.

7. Piston alternatif (1) selon l'une des revendications précédentes,
**caractérisé en ce que**
le piston alternatif (1) est en matériau carboné, en particulier en matériau graphite.

8. Machine à piston alternatif, en particulier moteur à piston alternatif, en particulier moteur à vapeur à piston alternatif ou compresseur à piston alternatif, comportant une transmission à bielle, en particulier une transmission à bielle en boucle,
**caractérisée en ce que**
la machine à piston alternatif comprend un piston alternatif (1) selon l'une des revendications précédentes.

9. Machine à piston alternatif selon la revendication 8,
**caractérisée en ce que**
la différence de la force de serrage de la vis (27 ; 76), en particulier de la vis à tête (27), à température ambiante, par rapport à la force de serrage à température nominale de fonctionnement de la machine à piston alternatif que présente la machine à piston alternatif en fonctionnement permanent à vitesse de rotation nominale est < 0.

10. Machine à piston alternatif selon la revendication 8 ou 9,
**caractérisée en ce que**
le coefficient de dilatation thermique αᵥᵢₛ de la vis à tête (27) et les coefficients de dilatation thermique α_{rondelle2}, _{rondelle1} ; αₚᵢₛₜₒₙ ; α_{tige} de piston ; α_{douille} taraudée des composants (1 ; 13, ; 15 ; 26 ; 53) serrés au moyen de la vis à tête (27), ainsi que les longueurs serrées de ces composants (1 ; 13, ; 15 ; 26 ; 53) et la longueur serrée de la vis à tête (27) sont dimensionnés de telle sorte que la différence de la force de serrage de la vis à tête (27) à température ambiante par rapport à la force de serrage à température nominale de fonctionnement de la machine à piston alternatif que présente la machine à piston alternatif en fonctionnement permanent à vitesse de rotation nominale est < 0.

11. Machine à piston alternatif selon l'une des revendications 8 à 10,
**caractérisée en ce que**
la force de serrage de la vis (27 ; 76), en particulier de la vis à tête (27), à température ambiante, est inférieure à la force de serrage à température nominale de fonctionnement de la machine à piston alternatif.

12. Machine à piston alternatif selon l'une des revendications 8 à 11,
**caractérisée en ce que**
au moins une chemise de cylindre (71) céramique agencée dans un alésage d'un cylindre et, dans la chemise de cylindre (71), le piston alternatif (1) est guidé de façon mobile en va-et-vient en particulier sans lubrification du piston, le piston alternatif (1) étant constitué en un matériau carboné et la chemise de cylindre (71) étant constituée en un matériau de carbure de silicium.
